# EUROPÄISCHE PATENTANMELDUNG

(11) **EP 4 818 830 A1**
(43) Veröffentlichungstag der Anmeldung: **07.10.2026**
(21) Anmeldenummer: 26168840.2
(22) Anmeldetag: 30.03.2026
(51) Int. Cl.: G05B 19/042

(54) **SICHERHEITSSTEUERUNG**

(30) Priorität: 04.04.2025 DE 102025113390
(71) Anmelder: Wieland Electric GmbH, 96052 Bamberg (DE)
(72) Erfinder: Ludvik, Marco, 91325 Adelsdorf (DE)
(74) Vertreter: 2K Patent Partnerschaft mbB

(57) **Zusammenfassung**

Eine Sicherheitssteuerung (10), ausgelegt zum gemäß einer Sicherheitsvorschrift funktional sicheren Ein- und Ausschalten eines elektrischen Verbrauchers, umfassend zumindest eine sichere Ein-/Ausgangsschnittstelle (3), ausgebildet zum Anschließen des elektrischen Verbrauchers unter Bildung eines funktional sicher schaltbaren Versorgungsstromkreises, weiter umfassend eine Sicherheitssteuereinheit (1), welche die Ausgänge der sicheren Ein-/Ausgangsschnittstelle (3) in Abhängigkeit von Signalen an den Eingängen der sicheren Ein-/Ausgangsschnittstelle (3) funktional sicher schaltet, soll den baulichen Aufwand bei der Installation reduzieren. Dazu umfasst i die Sicherheitssteuereinheit (1) einen ersten Mikroprozessor (1.1), einen zweiten, zum ersten Mikroprozessor (1.1) redundanten Mikroprozessor (1.2), und einen unveränderbaren Logik-Interpreter, und ist auf einer Aufsatzplatine ausgebildet, die Mittel zur mechanischen Befestigung auf einer Platine einer nicht-sicheren Steuerung des elektrischen Verbrauchers aufweist, und die eine Steuerschnittstelle (6) zum Anschluss nicht-sicherer Ein- und/oder Ausgänge der Platine der nicht-sicheren Steuerung umfasst, wobei die Sicherheitssteuerung (10) unabhängig und ohne Rückgriff auf externe Rechenressourcen arbeitet.

## Beschreibung

Die Erfindung betrifft eine Sicherheitssteuerung, ausgelegt zum gemäß einer Sicherheitsvorschrift funktional sicheren Ein- und Ausschalten eines elektrischen Verbrauchers, umfassend zumindest eine sichere Ein-/Ausgangsschnittstelle, ausgebildet zum Anschließen des elektrischen Verbrauchers unter Bildung eines funktional sicher schaltbaren Versorgungsstromkreises, weiter umfassend zumindest eine Eingangsschnittstelle sowie eine Sicherheitssteuereinheit, welche die Ausgänge der sicheren Ein-/Ausgangsschnittstelle in Abhängigkeit von Signalen an den Eingängen der sicheren Ein-/Ausgangsschnittstelle funktional sicher schaltet.

Sicherheitssteuerungen, wie sie z.B. aus der DE 10 2013 112 816 A1 oder der DE 10 2024 110 027 A1 bekannt sind, werden vor allem im industriellen Bereich verwendet, um elektrische Verbraucher sicher ein- und auszuschalten, die Gefahrenpotential für Mensch und Material bergen. Hierzu wird die Stromversorgung für den oder die elektrischen Verbraucher über eine Ausgangsschnittstelle der Sicherheitssteuerung gesteuert, an die der jeweilige Verbraucher über einen Aktor (z.B. Schütze, Ventile etc.) unter Bildung eines Versorgungsstromkreises angeschlossen wird. Sobald die Sicherheitssteuerung den Versorgungsstromkreis unterbricht, wird der Verbraucher in einen sicheren Zustand überführt, d.h. üblicherweise ausgeschaltet.

Typischerweise werden Sicherheitssteuerungen als separate, ggf. auch modular erweiterbare Bauteile ausgebildet, um deren unabhängige Funktion zu gewährleisten. Sie werden üblicherweise in einem Schaltschrank auf einer Hutschiene installiert und dort entsprechend über Klemmen verbunden, ggf. auch mit der nicht-sicheren Steuerung (z.B. speicherprogrammierbare Steuerung (SPS)) des elektrischen Verbrauchers, die den regulären Betrieb des Verbrauchers steuert.

Problematisch kann diese Anordnung in Situationen sein, in denen der elektrische Verbraucher eine integrierte Steuerung aufweist, die auf einer internen Platine realisiert ist und nicht als SPS in einem separaten Schaltschrank, in dem auch die Sicherheitssteuerung unkompliziert installiert und verkabelt werden könnte.

Es ist daher Aufgabe der Erfindung, eine Sicherheitssteuerung der eingangs genannten Art anzugeben, die den baulichen Aufwand bei der Installation reduziert.

Diese Aufgabe wird erfindungsgemäß gelöst, indem die Sicherheitssteuerung auf einer Aufsatzplatine ausgebildet ist, die Mittel zur mechanischen Befestigung auf einer Platine einer nicht-sicheren Steuerung des elektrischen Verbrauchers aufweist, und die eine Steuerschnittstelle zum Anschluss nicht-sicherer Ein- und/oder Ausgänge der Platine der nicht-sicheren Steuerung umfasst, und indem die Sicherheitssteuerung unabhängig und ohne Rückgriff auf externe Rechenressourcen arbeitet.

Die Erfindung geht dabei von der Überlegung aus, dass die Integration von Sicherheitsfunktionen bei Maschinen mit integrierten Steuerungen prinzipiell auch über eine bekannte, zur Sicherstellung der Rückwirkungsfreiheit autarke Sicherheitssteuerung in einem separaten Schaltschrank zu realisieren wäre. Dies würde aber den beschriebenen hohen Installationsaufwand bedingen. Will man dies vermeiden, könnte eine weitere Alternative sein, die Sicherheitsfunktion direkt in die Maschinensteuerung auf Softwareebene zu integrieren. Hierbei ergibt sich jedoch das Problem, dass die Integration erheblichen Aufwand bedeutet, da für die Erfüllung der entsprechenden Sicherheitsvorschriften in der Regel nachzuweisen ist, dass die Sicherheitsfunktionen unabhängig vom Zustand der Steuerung funktionsfähig sind, mithin keine Rückwirkungen der Steuerungsfunktion auf die Sicherheitsfunktion bestehen. Dies ist durch entsprechende Tests und Abnahmen auch nachzuweisen. Je nach Komplexität der integrierten Steuerung ist dies vergleichsweise aufwändig, da ggf. auch die Ein-/Ausgänge der Steuerung geändert werden müssten, um den Anforderungen an die funktionale Sicherheit zu genügen. Dies ist gerade der Vorteil von separaten, autarken Steuerungen, die vorab entsprechend zertifiziert werden können. Als Lösung wird daher vorgeschlagen, die elektronischen Bauteile der Sicherheitssteuerung auf einer Aufsatzplatine anzuordnen. Eine derartige Aufsatzplatine behält die Vorteile einer separaten, autarken Sicherheitssteuerung bei, da sie unabhängig und ohne Rückgriff auf externe Rechenressourcen arbeitet, ist jedoch mit entsprechenden mechanischen Befestigungsmitteln innerhalb der integrierten Maschinensteuerung einbaufähig. Darüber hinaus können auf diese Weise mit kurzen Wegen Verbindungen zu Verbindungspunkten innerhalb der Maschinensteuerung hergestellt werden.

Zusätzlich umfasst die Sicherheitssteuereinheit einen ersten Mikroprozessor und einen zweiten, zum ersten Mikroprozessor redundanten Mikroprozessor. Eine derartige Ausgestaltung mit im Sinne der funktionalen Sicherheit redundanten Mikroprozessoren, die eine zweikanalige Auswertung der Signale mit gegenseitiger Überprüfung erlauben, ermöglicht das Erreichen höherer Sicherheitsstufen. Die Redundanz kann hierbei durch parallele gegenseitige Überprüfung erreicht werden, oder aber durch einen Aufbau nach dem Lockstep-Prinzip.

Die Sicherheitssteuereinheit bzw. deren Mikroprozessor(en) weist weiterhin einen unveränderbaren Logik-Interpreter auf. Dies bedeutet, dass die Firmware der Sicherheitssteuereinheit, welche die Logik der Ausgänge in Abhängigkeit von den Signalen an den Eingängen bestimmt, nicht verändert wird. Änderungen sind lediglich durch vorgegebene Parametrierungen möglich, wobei jedoch bei einer Neuparametrierung die Maschine angehalten werden sollte und der Betrieb erst nach Abschluss und Prüfung der Neuparametrierung aufgenommen werden sollte. Die Firmware selbst bleibt jedoch unveränderlich, was z.B. über Hash-Werte überprüfbar ist. Der Vorteil besteht hier darin, dass die Firmware vorab von den zuständigen Prüfstellen (z.B. TÜV) abgenommen und zertifiziert werden kann.

In weiterer vorteilhafter Ausgestaltung umfasst die Steuerschnittstelle Kommunikationsmittel nach einem nicht-sicheren Kommunikationsstandard. Dies ermöglicht es, nicht sichere Ein-/Ausgangssignale über standardisierte Schnittstellen auszutauschen. Die Steuerschnittstelle kann dabei eine entsprechende Vorverarbeitung dieses Signale vornehmen.

Vorteilhafterweise umfasst die Steuerschnittstelle Universal Serial Bus-(USB-) und/oder Ethernet-Kommunikationsmittel. Dies ermöglicht in standardisierter Weise einen Anschluss auch an externe Signale außerhalb der integrierten Platine der nicht-sicheren Steuerung.

Alternativ oder zusätzlich umfasst die Steuerschnittstelle vorteilhafterweise Kommunikationsmittel für einen Platinenbus, insbesondere Inter-Integrated-Circuit-(I2C-), Serial Peripheral Interface-(SPI-) und/oder Universal Asynchronous Receiver/Transmitter-(UART-)Kommunikationsmittel. Diese ermöglicht eine einfache Anbindung an Signale auf der Platine der nicht-sicheren Maschinensteuerung, auf die die Sicherheitssteuerung aufgesetzt wird.

In einer weiteren, optional auch zusätzlichen Variante umfasst die Steuerschnittstelle Printed Circuit Board-(PCB-)Steckverbinder umfasst. Dies ermöglicht es, Signale mit dem der Platine der nicht-sicheren Maschinensteuerung auszutauschen, die an solchen Steckverbindern anliegen.

In besonders vorteilhafter Ausgestaltung der Sicherheitssteuerung ist die Steuerschnittstelle dafür ausgebildet, Rückwirkungen der nicht-sicheren Steuerung des elektrischen Verbrauchers auf die Sicherheitssteuereinheit zu unterbinden. Eine derartige Rückwirkungsfreiheit ist für die Erreichung hoher Sicherheitsstufen erforderlich. Die Rückwirkungsfreiheit kann dabei durch geeignete Maßnahmen in der Steuerschnittstelle gewährleistet werden, z.B. durch eine entsprechende Logik oder hardwareseitige Maßnahmen.

Vorteilhafterweise umfasst die Sicherheitssteuerung weiterhin eine sichere Ein-/Ausgangseinheit mit mechanischen Befestigungsmitteln, die mit der sicheren Ein-/Ausgangsschnittstelle verbunden ist. Dies ermöglicht es, die innerhalb der Sicherheitssteuerung erzeugten oder benötigten Signale, die eine erhöhte Sicherheitsstufe erfordern, z.B. sichere Ausgangssignale zum Abschalten der Maschine, oder Eingangssignale von externen Not-Aus-Schaltern oder Lichtschranken sicher zu verarbeiten. Die Ein-/Ausgangseinheit weist hierfür entsprechende Klemmen auf und kann z.B. am Gehäuse der Maschinensteuerung befestigt werden.

In weiterer vorteilhafter Ausgestaltung der Sicherheitssteuerung ist deren Logik, nach der die Sicherheitssteuereinheit die Ausgangsschnittstelle in Abhängigkeit von Signalen an der Eingangsschnittstelle funktional sicher schaltet, mittels einer grafischen Benutzeroberfläche programmierbar. Eine derartige Programmierbarkeit der Sicherheitssteuereinheit bietet gerade bei einer Integration in eine Maschinensteuerung den zusätzlichen Vorteil, die Logik der Sicherheitssteuerung flexibel an die Anforderungen und die verfügbaren/benötigten Signale anpassen zu können.

Die mit der Erfindung erzielten Vorteile bestehen insbesondere darin, dass durch die Ausbildung einer autarken, programmierbaren Sicherheitssteuerung auf einer Aufsatzplatine eine einfache Lösung der sicherheitsrelevanten Anteile einer integrierten Maschinensteuerung durch eine vorzertifizierte, logisch autarke, aber physikalisch vollständig integrierbare Sicherheitssteuerung ermöglicht wird. Die Vorteile einer autarken, programmierbaren Sicherheitssteuerung können damit genutzt werden, ohne diese als zusätzliche sichtbare Komponente zu benötigen. Zusätzlich entfällt der Verkabelungsaufwand. Die vorgeschlagene Lösung erschließt neue Applikationen, da sie ermöglicht, eine Sicherheitssteuerung in integrierten Maschinensteuerungen, außerhalb von Schaltschränken, einzubauen. Dies ist insbesondere für Serienmaschinen mit eigener Nicht-SPS-Maschinensteuerung attraktiv.

Ausführungsbeispiele der Erfindung werden anhand von Zeichnungen näher erläutert. Darin zeigen:
- FIG 1: eine auf einer Aufsatzplatine realisierte Sicherheitssteuerung; und
- FIG 2: eine auf einer Aufsatzplatine realisierte Sicherheitssteuerung mit zweikanalig redundanter Struktur.

Gleiche Teile sind in allen Zeichnungen mit identischen Bezugszeichen versehen.

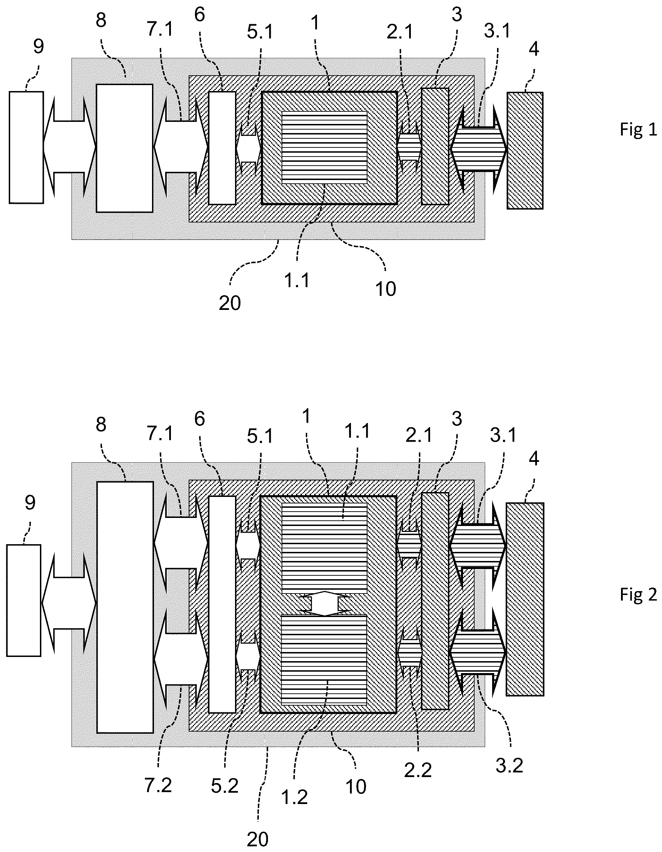

FIG 1 zeigt eine Sicherheitssteuerung 10, d.h. eine spezielle Art einer speicherprogrammierbaren Steuerung (SPS), die dazu dient, sicherheitskritische Prozesse in Maschinen und Anlagen zu überwachen und ggf. steuernd einzugreifen. Ihr Hauptzweck ist es, Risiken für Menschen und Maschinen zu minimieren, indem sie sicherheitsrelevante Funktionen übernimmt und im Fehlerfall gezielte Sicherheitsmaßnahmen einleitet. Sicherheitssteuerungen 10 kommen in verschiedenen Industrien zum Einsatz, z. B. in der Automatisierungstechnik, Robotik oder Prozesssteuerung.

Die in FIG 1 gezeigte Sicherheitssteuerung 10 umfasst mehrere Komponenten, die speziell darauf ausgelegt sind, hohe Sicherheitsstandards zu erfüllen. Zunächst umfasst sie eine zentrale Sicherheitssteuereinheit 1, die spezielle Sicherheitsalgorithmen und Sicherheitslogiken 1.1 enthält. Der im Mikroprozessor der Sicherheitssteuereinheit 1 hinterlegte Logik-Interpreter der Sicherheitssteuereinheit 1 ist hinsichtlich seiner Firmware unveränderbar und nur durch vorgegebene Parametrierungen an den konkreten Einsatzzweck anpassbar. Der Logik-Interpreter sowie die gesamte Sicherheitssteuerung 1 sind vorab nach einer strengen Sicherheitsvorschrift (z. B. IEC 61508, ISO 13849 in der gültigen Version zum Anmeldetag dieser Anmeldung) entwickelt und zertifiziert. Sie unterliegt einer zyklischen Selbstüberprüfung zur Fehlererkennung. Zudem ist sie für eine Fehlerdiagnose und schnelle Reaktionszeit im Falle eines Fehlers optimiert.

Die Sicherheitssteuereinheit 1 ist über eine sichere Kommunikationsschnittstelle 2.1 mit einer sicheren Ein-/Ausgangsschnittstelle 3 verbunden. Diese umfasst Treiber für sichere Ausgänge und ggf. eine Vorverarbeitung für Signale von sicheren Eingängen, die später noch beschrieben werden. Die Sicherheitssteuereinheit 1 enthält im Wesentlichen eine Logik, um auf Basis der an Eingängen anliegenden Signale ein funktional sicheres Ein- und Ausschalten an den Ausgängen zu steuern. Der Grad der erreichten Sicherheit wird in den Normen durch Parameter für die Zuverlässigkeit der Sicherheitsfunktion von Geräten definiert. Beispielsweise werden in der EN 61508 die Berechnungsgrundlagen für PFH (probability of dangerous failure per hour - Wahrscheinlichkeit des Versagens pro Stunde) und PFD (probability of dangerous failure on demand - Wahrscheinlichkeit eines Versagens bei Anforderung) geliefert. Aus diesen Parametern lässt sich die Sicherheitsstufe SIL ablesen. Des Weiteren wird in der EN 61508 die SFF (Safe Failure Fraction) eingeführt, ein Maß dafür, welcher Anteil aller denkbaren Fehler in die sichere Richtung geht.

Die genaue Logik der Verschaltung der Ein- und Ausgänge in der Sicherheitssteuereinheit 1 wird im Ausführungsbeispiel mittels einer nicht näher dargestellten graphischen Benutzeroberfläche erstellt. In dieser werden Ein- und Ausgänge über Logikbausteine miteinander verschaltet und eine Parametrierung erstellt, die dann in die Sicherheitssteuerung 10 geladen wird und die Logik im Betrieb steuert. Wie bereits oben dargestellt, ist dabei die Firmware der Sicherheitssteuereinheit vorab zertifiziert und unveränderbar und erlaubt lediglich eine Parametrierung über die Logikbausteine. Diese Parametrierung ist somit so flexibel, dass der gesamte Logikplan frei konfigurierbar ist, ohne die Zertifizierung zu verlieren.

Die Sicherheitssteuerung 10 gemäß FIG 1 ist weiterhin zur Anbindung an eine nicht-sichere Steuerung 8 zur Steuerung des normalen Betriebs der Maschine ausgebildet. Nicht-sichere Steuerung 8 und Sicherheitssteuerung 10 bilden gemeinsam das Steuersystem 20 einer Maschine, wobei die nicht-sichere Steuerung 8 über nicht sichere Ein-/Ausgänge 9 den Arbeitsbetrieb der Maschine steuert.

Zur Kommunikation umfasst die Sicherheitssteuerung eine über eine Kommunikationsschnittstelle 5.1 verbundene Steuerschnittstelle 6. Diese ist über geeignete Kommunikationsmittel 7.1, die im Folgenden noch beschrieben werden, mit der nicht-sicheren Steuerung 8 verbunden. Über die Steuerschnittstelle 6 werden keine sicherheitsrelevanten, sondern insbesondere Diagnose- und Statusdaten übertragen. Eine weitere wichtige Funktion der Steuerschnitttstelle 6 ist insbesondere die Sicherstellung der Rückwirkungsfreiheit der Signale der nicht-sicheren Steuerung 8 auf die Sicherheitsfunktion der Sicherheitssteuerung 10.

Im Ausführungsbeispiel ist die nicht-sichere Steuerung nicht wie häufig üblich als SPS in einem separaten Schaltschrank ausgebildet, sondern als integrierte Steuerung ausgeführt. Das bedeutet, dass die nicht-sichere Steuerung 8 auf einer Platine innerhalb eines Gehäuses der Maschine ausgebildet ist.

Um in einfacher Weise mit minimiertem baulichen Aufwand die Sicherheitsfunktion zu gewährleisten, ist die Sicherheitssteuerung 10 im Ausführungsbeispiel daher als Aufsatzplatine ausgebildet, oft auch als "Shield" oder "Daughterboard" bezeichnet. Sie ist also nicht Steuerung in einem separaten Gehäuse ausgebildet, sondern auf einer in Leiterplatte, die zur Erweiterung der Funktionalität der nicht-sicheren Steuerung 8 auf der Hauptplatine ("Motherboard" oder "Baseboard") um die gewünschten Sicherheitsfunktionen dient. Sie wird im Ausführungsbeispiel auf die Hauptplatine mit der nicht-sicheren Steuerung 8 aufgesteckt oder aufgesetzt und erweitert diese um die oben beschrieben Sicherheitsfunktionen, ohne dass eine komplexe Verkabelung oder umfangreiche Modifikationen der Hauptplatine notwendig sind.

Für die mechanische Verbindung mit der Hauptplatine weist die Sicherheitssteuerung 10 als Aufsatzplatine entsprechende Mittel zur mechanischen Befestigung auf, z.B. spezielle Steckverbinder (z. B. Stiftleisten oder Buchsenleisten), die eine einfache Montage auf der Hauptplatine ermöglichen. In Ausführungsbeispielen kann die Aufsatzplatine auch einem standardisierten Formfaktor (z.B. COMexpress) entsprechen, um die Montage zu erleichtern. Zusätzlich können zur mechanischen Stabilisierung z. B. durch Abstandshalter oder Schraubverbindungen verwendet werden.

Die Steuerschnittstelle 6 der in FIG 1 gezeigten Sicherheitssteuerung 10 weist geeignete nicht-sichere Kommunikationsmittel auf, die insbesondere auf Platinen verwendet werden, nämlich I2C-, SPI- oder UART-Kommunikationsmittel. Weiterhin sind PCB-Steckverbinder vorgesehen, um Nicht-Bus-Signale anzubinden. Zur Anbindung weiterer nicht sicherer Signale außerhalb der Hauptplatine können auch USB- oder Ethernet-Schnittstellen vorgesehen sein.

Die Stromversorgung der Sicherheitssteuerung 10 wird in Ausführungsbeispielen separat von der Hauptplatine erfolgen. Zumindest enthält die Aufsatzplatine aber eigene Spannungsregler oder ggf. Pufferbausteine zur Signalanpassung. Die Aufsatzplatine ist in sich abgeschlossen und damit separat und vorab überprüfbar und zertifizierbar. Durch die Programmierbarkeit über eine Programmiersoftware mit ebenfalls vorab zertifizierten Logikbausteinen erlaubt sie dennoch eine Anpassung an die spezifischen Gegebenheiten der Maschine.

In typischen, in einem eigenen Gehäuse in einem Schaltschrank vorgesehenen Sicherheitssteuerungen sind die Klemmen der Ein-/Ausgänge zum Anschluss der Aktoren und Sensoren in der Regel direkt am Gehäuse oder an Erweiterungsmodulen vorgesehen. Bei der im Ausführungsbeispiel in FIG 1 als Aufsatzplatine realisierten Sicherheitssteuerung 10 sind diese Klemmen auf einer separaten sicheren Ein-/Ausgangseinheit 4 vorgesehen, die über eine sichere Steuerschnittstelle 3.1 mit der sicheren Ein-/Ausgangsschnittstelle 3 verbunden ist. Diese kann z.B. in einer Öffnung des Gehäuses der Maschine angeordnet sein, so dass sie von außen erreichbar sind. Hier können dann in einfacher Weise die entsprechenden sicherheitsrelevanten Sensoren wie Not-Halt-Taster, Lichtgitter oder Sicherheitsendschalter sowie die sicherheitskritischen Aktoren wie Schütze, Relais oder Sicherheitsventile angeschlossen werden.

FIG 2 zeigt schließlich eine weitere Ausführungsform der Sicherheitssteuerung 10, die nur anhand ihrer Unterschiede zur Ausführungsform der FIG 1 beschrieben wird. Die Sicherheitssteuerung 10 der FIG 2 ist für besonders hohe Sicherheitsstufen ausgelegt und arbeitet dazu nach dem Prinzip der Zwei-Kanal-Redundanz: In der Sicherheitssteuereinheit 1 sind dabei zwei unabhängige Mikroprozessoren 1.1, 1.2 vorgesehen, die unabhängig voneinander die Eingangssignale auswerten und gegenseitig ihre Ergebnisse überprüfen. Im Ausführungsbeispiel ist dabei der gesamte Kommunikationsweg, d.h. sichere Kommunikationsschnittstellen 2.1, 2.2, sichere Steuerschnittstellen 3.1, 3.2, Kommunikationsschnittstellen 5.1, 5.2 und Kommunikationsmittel 7.1, 7.2 zweikanalig aufgebaut.

### Bezugszeichenliste

- 1: Sicherheitssteuereinheit
- 1.1, 1.2: Sicherheitslogik
- 2.1, 2.2: sichere Kommunikationsschnittstelle
- 3: sichere Ein-/Ausgangsschnittstelle
- 3.1, 3.2: sichere Steuerschnittstelle
- 4: sichere Ein-/Ausgangseinheit
- 5.1, 5.2: Kommunikationsschnittstelle
- 6: Steuerschnittstelle
- 7.1, 7.2: Kommunikationsmittel
- 8: nicht-sichere Steuerung
- 9: nicht-sichere Ein-/Ausgänge
- 10: Sicherheitssteuerung
- 20: Steuersystem

## Patentansprüche

1. Sicherheitssteuerung (10), ausgelegt zum gemäß einer Sicherheitsvorschrift funktional sicheren Ein- und Ausschalten eines elektrischen Verbrauchers, umfassend zumindest eine sichere Ein-/Ausgangsschnittstelle (3), ausgebildet zum Anschließen des elektrischen Verbrauchers unter Bildung eines funktional sicher schaltbaren Versorgungsstromkreises, weiter umfassend eine Sicherheitssteuereinheit (1), welche die Ausgänge der sicheren Ein-/Ausgangsschnittstelle (3) in Abhängigkeit von Signalen an den Eingängen der sicheren Ein-/Ausgangsschnittstelle (3) funktional sicher schaltet,
wobei die Sicherheitssteuereinheit (1) einen ersten Mikroprozessor (1.1), einen zweiten, zum ersten Mikroprozessor (1.1) redundanten Mikroprozessor (1.2), und einen unveränderbaren Logik-Interpreter umfasst, wobei die Sicherheitssteuerung (10) auf einer Aufsatzplatine ausgebildet ist, die Mittel zur mechanischen Befestigung auf einer Platine einer nicht-sicheren Steuerung des elektrischen Verbrauchers aufweist, und die eine Steuerschnittstelle (6) zum Anschluss nicht-sicherer Ein- und/oder Ausgänge der Platine der nicht-sicheren Steuerung umfasst, und wobei die Sicherheitssteuerung (10) unabhängig und ohne Rückgriff auf externe Rechenressourcen arbeitet.

2. Sicherheitssteuerung (10) nach einem der vorhergehenden Ansprüche, bei der die Steuerschnittstelle (6) Kommunikationsmittel nach einem nicht-sicheren Kommunikationsstandard aufweist.

3. Sicherheitssteuerung (10) nach dem vorhergehenden Anspruch, bei der die Steuerschnittstelle (6) Universal Serial Bus-(USB-) und/oder Ethernet-Kommunikationsmittel umfasst.

4. Sicherheitssteuerung (10) nach einem der beiden vorhergehenden Ansprüche, bei der die Steuerschnittstelle (6) Kommunikationsmittel für einen Platinenbus, insbesondere Inter-Integrated-Circuit-(I2C-), Serial Peripheral Interface-(SPI-) und/oder Universal Asynchronous Receiver/Transmitter-(UART-)Kommunikationsmittel umfasst.

5. Sicherheitssteuerung nach einem der drei vorhergehenden Ansprüche, bei der die Steuerschnittstelle (6) Printed Circuit Board-(PCB-)Steckverbinder umfasst.

6. Sicherheitssteuerung (10) nach einem der vorhergehenden Ansprüche, bei der die Steuerschnittstelle (6) dafür ausgebildet ist, Rückwirkungen der nicht-sicheren Steuerung des elektrischen Verbrauchers auf die Sicherheitssteuereinheit zu unterbinden.

7. Sicherheitssteuerung (10) nach einem der beiden vorhergehenden Ansprüche, weiter umfassend eine sichere Ein-/Ausgangseinheit mit mechanischen Befestigungsmitteln, die mit der sicheren Ein-/Ausgangsschnittstelle (3) verbunden ist.

8. Sicherheitssteuerung (10) nach einem der vorhergehenden Ansprüche, deren Logik, nach der die Sicherheitssteuereinheit die Ausgänge in Abhängigkeit von Signalen an den Eingängen funktional sicher schaltet, mittels einer grafischen Benutzeroberfläche programmierbar ist.
